# EUROPEAN PATENT APPLICATION

(11) **EP 2 907 746 A1**
(43) Date of publication of application: **19.08.2015**
(21) Application number: 13844605.9
(22) Date of filing: 04.10.2013
(51) Int. Cl.: B64C 11/00, B63H 1/00

(54) **PIROGOV FLYWHEEL-EFFECT PROPELLER HAVING AN ASYMMETRICALLY ROTATING BLADE**

(30) Priority: 10.10.2012 RU 2012143339
(71) Applicant: Pirogov, Aleksei Aleksandrovich, Neklinovsky raion, Rostovskaya obl. 346847 (RU); Kholoshenko, Roman Stanislavovich, Rostovskaya obl. 346300 (RU)
(72) Inventor: Pirogov, Aleksei Aleksandrovich, Neklinovsky raion, Rostovskaya obl. 346847 (RU); Kholoshenko, Roman Stanislavovich, Rostovskaya obl. 346300 (RU)
(74) Representative: Spengler, Robert
(86) International application number: PCT/RU2013/000881
(87) International publication number: WO 2014/058353

(57) **Abstract**

The invention relates to the field of air, above-water and underwater transport, in particular to airscrews for aircraft, helicopters and above-water vehicles and to marine propellers for above-water and underwater vehicles and can be used in devices for moving liquid and free-flowing substances. The device comprises a hollow body, inside which it is possible to arrange one or two of said blades on corresponding spindles. The device comprises a body in the form of a hollow shell with diametrically opposite longitudinal through-slots, wherein the body can rotate relative to its longitudinal axis. The blade drive and the housing drive mechanism are connected to form a combined power drive, which is capable of performing a synchronous rotation of the housing and the blade in the same direction, thereby ensuring that the asymmetric position of the blade and said lateral slots in the housing periodically coincide with one another. The hollow shell can have the shape of a cylinder or a body of revolution with a curvilinear cross section, and said slots can have a rectangular or curvilinear shape. Said rotary spindle of the blade can be mounted at various angles with respect to said blade or can be shifted towards the outer surface of the housing. Said power drive of the blade spindle and the housing can be mechanical, independently electrical, independently electromechanical or independently hydraulic. In the case of a propeller design with two blades, the blades rotate in mutually opposite directions with the possibility of simultaneously exiting the housing asymmetrically into one and the same slot in the housing. Said fixing of the frame of the housing of the screw to the vehicle can be performed such that said frame is capable of rotating in any desired manner in three dimensions, for example can be spherical, or in the form of axes of Cartesian coordinate axes which are oriented in three directions.

## Description

### Application Area

This invention is related to air, water surface and underwater transport means, in particular to air propellers of aircraft, helicopters and water surface vessels and to water to screws of water surface and underwater vessels.

This design can also be used in devices with blade wheels for loading and unloading liquids and free-flowing solid materials.

### Present Technology Level

There is a flywheel screw with an asymmetrical rotary blade, comprised of a body constructed so that it can be rotated around a longitudinal axis with a power drive and at least one blade mounted on the axis inside the body and provided with a separate drive (published Russian patent application RU No. 2010144758 "A Stride Forming Method and a Device in the Form of a Flap Screw", V63N1/00 (2006.01), V64S11/00 (2006.01), published on 10.05.2012).

This technological solution is the closest to the present invention and thus accepted as a prototype.

The drawbacks of the prototype are: low efficiency when used in vessels due to the lack of stability of the lifting force vector direction, caused by the constantly changing position of the plane of the blade with respect to the direction of its rotation, and also along the longitudinal axis.

### Fundamental Contents of the Invention

This invention aims at producing means of converting strides of blades into linear motion of either a technical object or of media that need to be moved.

The engineering effect of this invention is stabilization of the trajectory of movement of an object while moving it in the right direction.

The engineering result this invention produces is ensuring stability of the vector of the applied force in the direction of the translatory motion of an object under the effect of the blade.

General and specific important features substantiating the causal connection of this invention with the engineering result are as follows.

The body represents a hollow shell, carrying longitudinal openings located in diametrically opposed locations, the longitudinal axes of which are positioned in a plane passing either through the axis of the body or at acute angle to that axis. The said blade is housed inside the shell and has the shape of a wing, the rotation axis of which forms an angle with the plane of the wing and is vertical to the axial plane of the openings in such a fashion that the blade can freely pass through the said two longitudinal openings cut on the side surface of the body. The body is mounted on a frame fitted with means of fastening the assembly to a vessel, while the drive of the blade and the drive of the body are assembled to form an integrated power drive, designed to ensure that the body and blade rotate synchronously and in the same direction, and the asymmetric position of the blade and the said side openings in the body coincide periodically. The said hollow shell can be formed as a cylinder or a revolution body of a curvilinear polyhedron cross section. The said openings have either a rectangular or a curvilinear shape. The said rotation axis of the blade can be set at a straight angle thereto. The said rotation axis of the blade is either positioned in a plane drawn through the axis of the body or offset towards the outer surface of the body. The said power drive of the axis of the blade and body is made in the form of anglar drive, connecting the axis of the blade with the rotation shaft of the power drive of the body and can have the form of an autonomous electric, elecromechanical or hydraulic toothed tapered gear box or a friction tapered gear box. The two blades, in the design of a screw with two blades, rotate in opposite directions and are capable of leaving the shell asymmetrically and simultaneously through the same opening in the body. The said fastening of the frame of the body to a vessel can be modified to let it rotate arbitrary around with a spheric or in the form of axes directed along three axes of Cartesian coordinate axes.

### Drawings

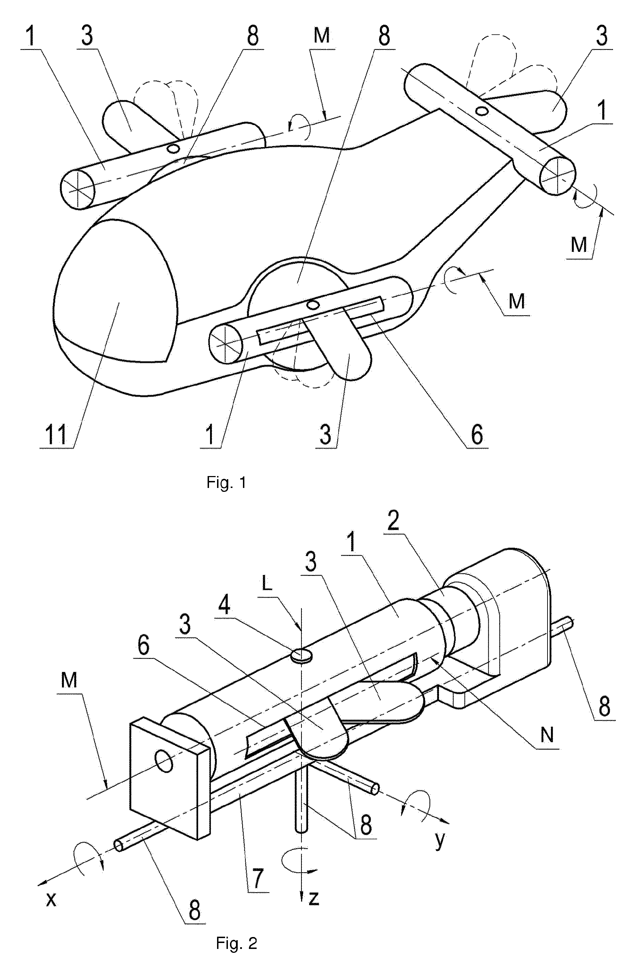

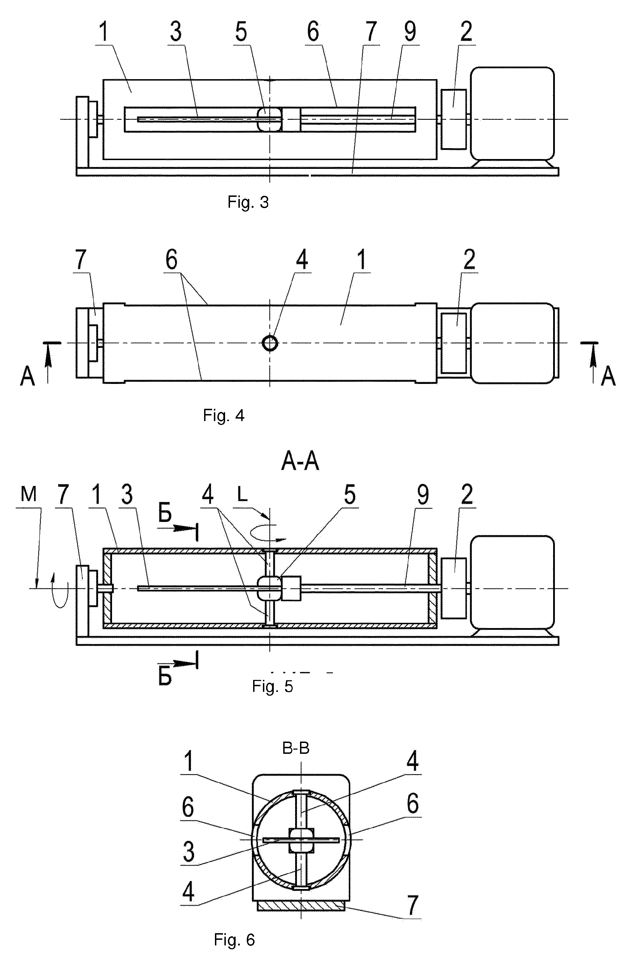

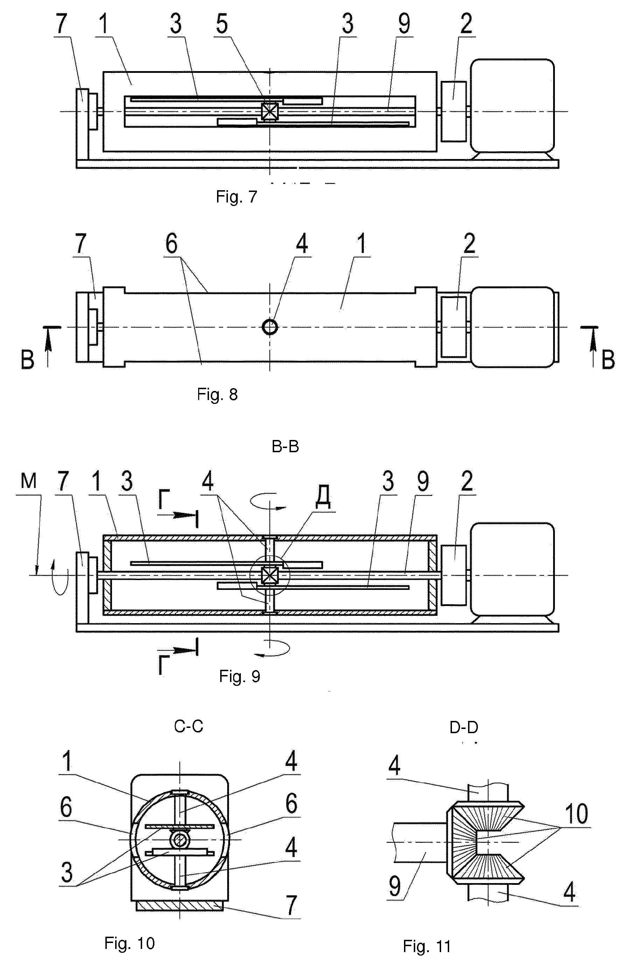

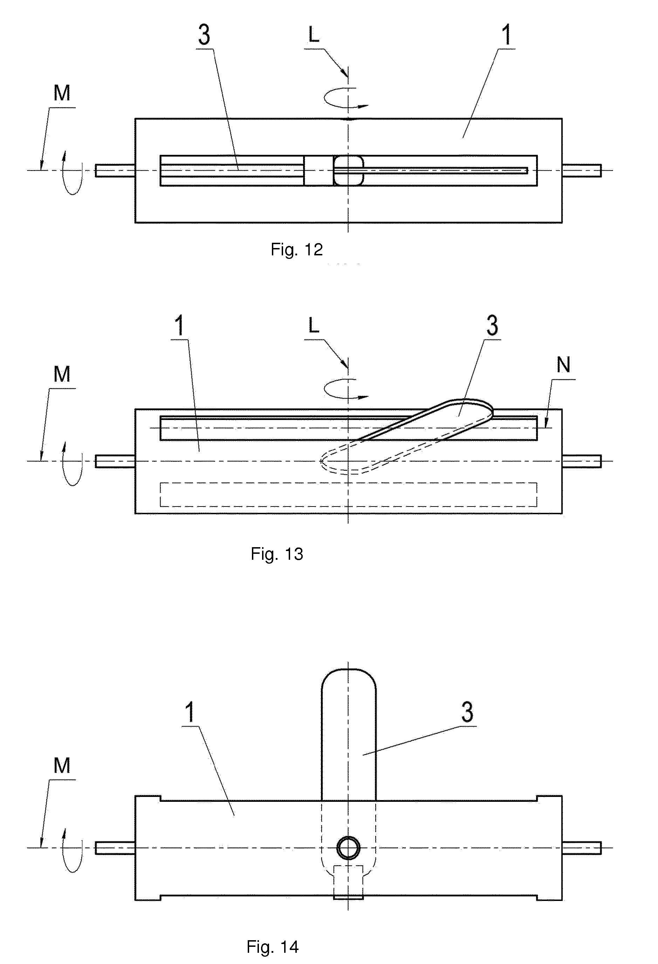

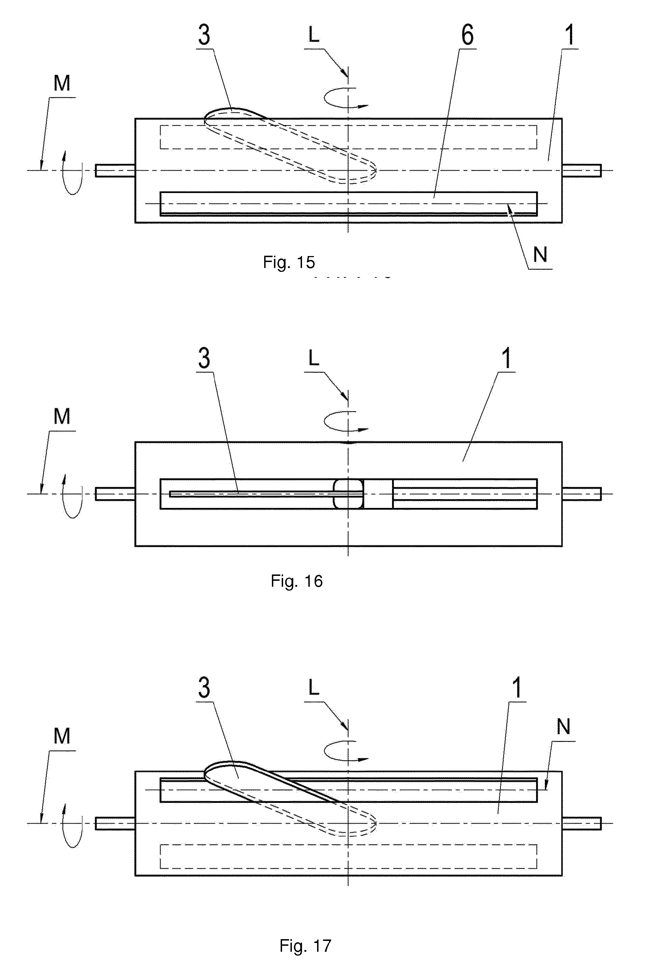

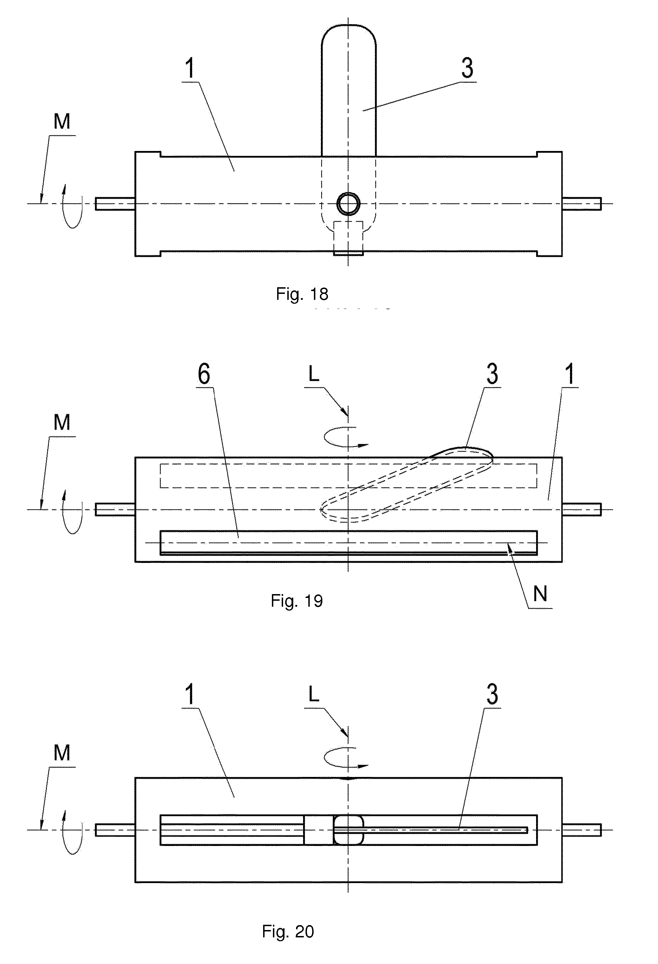

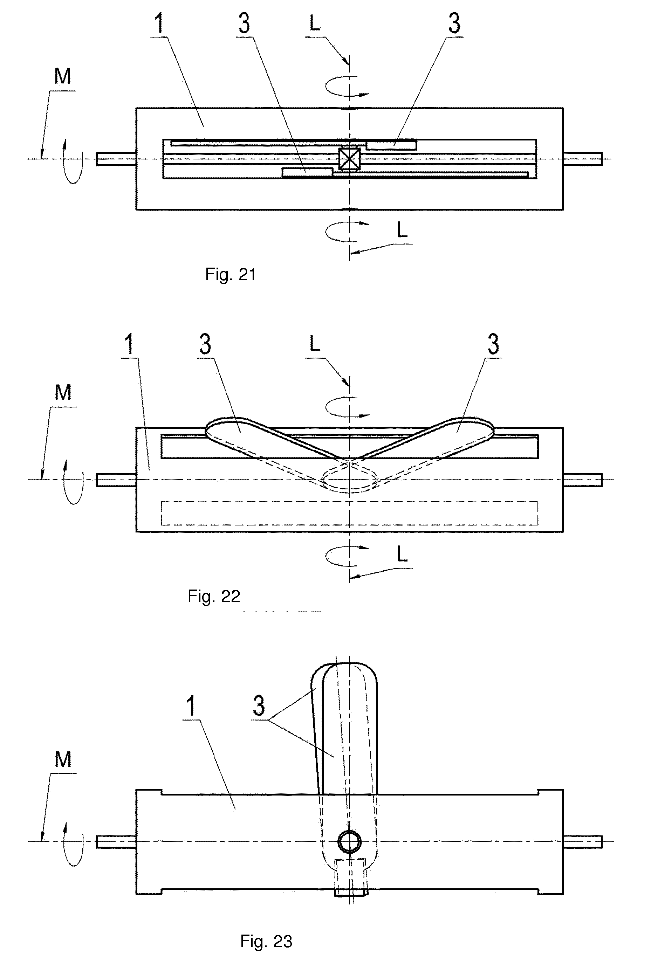

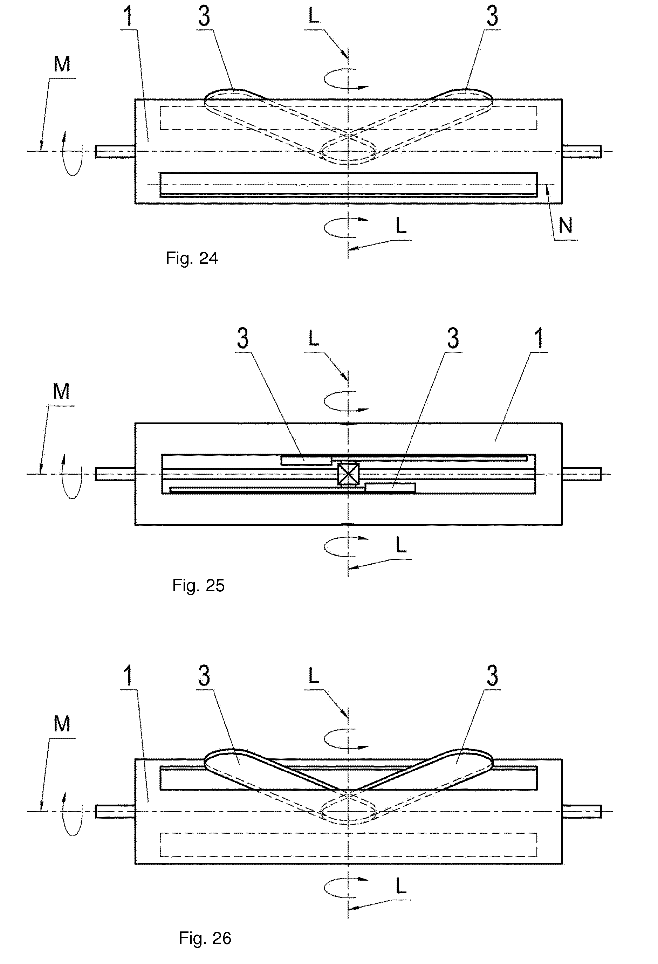

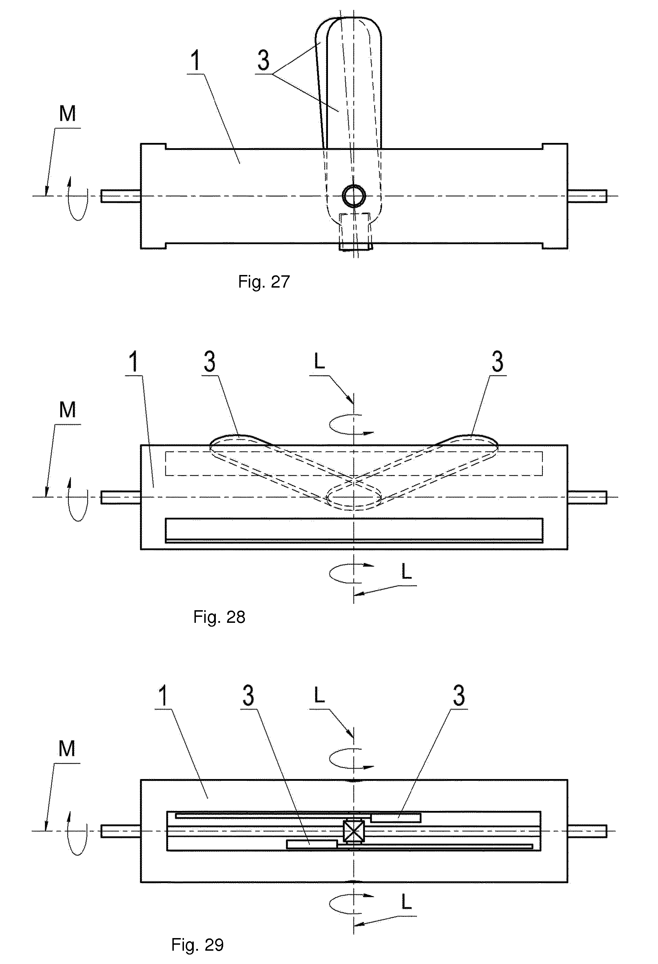

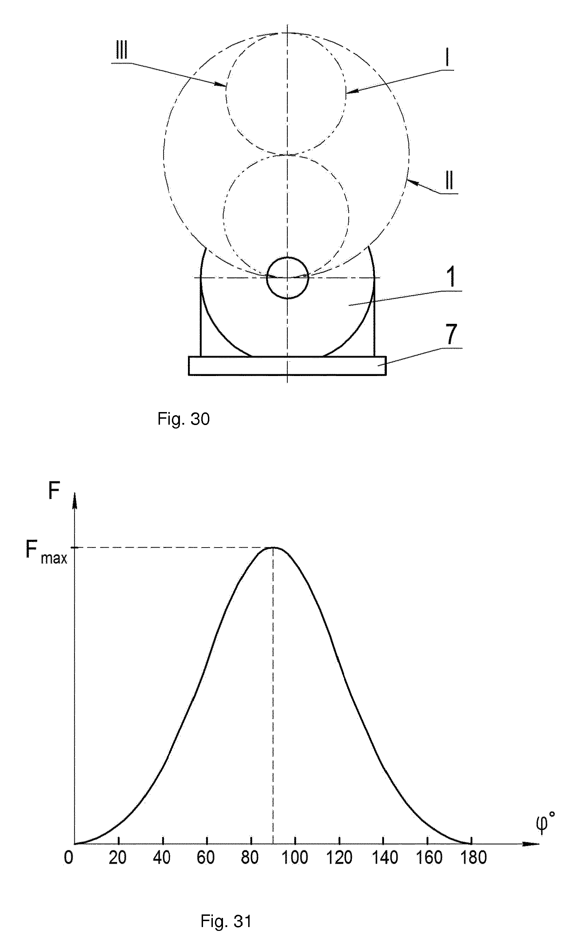

This invention is illustrated with the following drawings: Fig. 1 show the general view of the assembly mounted on a vessel; Fig. 2 shows the general view of the assembly with two blades- isometric; Fig. 3 represents a side view of the device with a single blade; Fig. 4: same: top view; Fig. 5 shows the view along A-A in Fig. 4; Fig. 6 shows the view along B-B 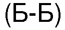 in Fig. 5; Fig. 7 represents a side view of the device with two blades; Fig 8 shows the same from the top; Fig. 9 shows the view along V-V (B-B)in Fig. 8; Fig. 10 shows the G-G 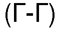 view in Fig. 9; Fig. 11 shows the D 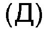 view in Fig. 9; Fig. 12 shows the start position of the one-blade device (and on up to Fig. 20); Fig. 13 shows the first quarter of the blade leaving the shell; Fig. 14 shows a blade at a straight angle with the axis of the body; Fig. 15 shows the second quarter of the blade leaving the shell; Fig. 16 shows the blade at 180º with the start position; Fig. 17 represents the blade in the third quarter of its exit; Fig. 18 shows the blade at 270º with its start position; Fig. 19 shows the blade in the fourth quarter of its leaving the shell; Fig. 20 shows the blade at an angle of 360º with its start position: return to its start position; Fig. 21 shows the start position of the two-blade assembly (up to Fig. 29); Fig. 22 represents the first quarter of the blades leaving the shell; Fig. 23 shows the blades at a straight angle with the shell axis; Fig. 24 represents the second quarter of the blades exit; Fig. 25 shows the blades at 180º with their start position; Fig. 26 shows the blades in the third quarter; Fig. 27 shows the blades at 270º with their start position; Fig. 28: the blades in the fourth quarter from the start; Fig. 29: the blades are at 360º with their start position: return to the start position; Fig. 30: the summary route of the end of a blade: Fig. 31 represents a graph showing variation of the lifting force of a blade per one stride.

### Description of the Invention

The flywheel screw includes body 1 that can rotate around its longitudinal axis M thanks to power drive 2, and at least one blade 3, positioned on axis 4 and provided with power drive 5 and fixed to body 1.

Body 1 can be made in the form of a hollow shell with longitudinal cut-trough openings 6 on its outer surface diametrically opposite each other, and their longitudinal axes N (Fig. 2) are located in a plane drawn through axis M of the body or forming an acute angle with that (not shown in the drawings). The version when the body has a frame construction either covered with the said cover or without it can also be manufactured.

The said blade 3 is placed inside the hollow of body 1 and made in the shape of a wing, the rotation axis L of which is placed at an angle with the wing surface and vertical to the axial plane of openings 6, and blade 3 can pass with ease through the said two longitudinal openings 6 on the side surface of body 1.

Body 1 is mounted on frame 7 provided with fastening 8 to fasten it to the vessel, while said power drive 5 of blade 3 and power drive 2 of body 1 are combined, forming a integrated power drive, capable of rotating body 1 and blade 3 synchronously and in the same direction, ensuring that the asymmetric position of blade 3 and the said side openings 6 in cut-through opening in body 1 coincide at regular intervals. Blade 3 always leaves body 1 through the openings during the outer portion of the circle of their rout.

The said hollow shell (body) 1 can be made in the shape of a cylinder or a rotation body of curvilinear cross section (not shown). Openings 6 can be of either rectangular or curvilinear (not shown) shape. The said rotation axis L of blade 3 can be mounted either at the straight angle or at a different angle to the axis, provided this guarantees that blade 1 and openings 6 coincide. Blade 3 rotation axis L can be positioned in a plane drawn through axis M of body 1, or it can be displaced towards the outer surface of body 1. The said power drive of axis 4 of blade 3 and body 1 can be manufactured as an mechanical device in the form of an angle drive linking axis 4 to shaft 9 of power drive 2 that rotates body 1 or else in the form of a tapered gear box 10 (Fig. 11), or a friction tapered gear box, autonomous electric, electromechanical or hydraulic. In the design with two blades (Fig. 9) blades 3 rotate in opposite directions and are capable of leaving body 1 through the same opening 6 in body 1 simultaneously and asymmetrically. The said fastening of frame 7 of body 1 to vessel 11 can be designed so that it can be rotated at will: spherical (Fig. 1) or in the form of axes directed along three Cartesian axes (Fig. 2).

Comparing the suggested engineering solution to the state of the art known from the main and related publications in scientific and technical literature and from patent documents at the priority date, the authors could not find a device that would be characterised by features identical to all the features included in the Claims section of this invention, which includes the application feature. In other words, the combination of essential features of the proposed solution has not been previously known and is not identical to any known technological solutions, therefore it complies with the 'novelty' aspect of patentability.

### Industrial Applications

This engineering solution is applicable in industry because the Description part of this application and the name of the invention spell out the areas of its application. It can be manufactured by industrial methods and used in transport means for transportation of liquid and free-flow solids.

This engineering solution is efficient, can be manufactured and is reproducible. Specific characteristics of the device ensure that the expected engineering result is achieved, i.e. they are essential.

The engineering solution in the form described in each of the claims, can be produced, using the means and methods described in the prototype invention, which became widely available prior to the priority date of this invention. Consequently, the presently claimed engineering solution complies with the "applicability aspect" of patentability.

Analysis of known engineering solutions in the area of this invention showed that professionals could not have derived the proposed device as an obvious one from the state of the art because no engineering solutions with features identical to the distinguishing features of this invention, have been found; nor has been found any proof that the distinguishing features would produce the engineering result indicated in the present application. In other words, the present invention has features absent in prior art, while the use of these essential features in the combination that is claimed in this application produces the new engineering result: ensured stability of the position of the force vector in the direction of the translatory motion of the object due to the blade.

Consequently, the proposed engineering solution can only be arrived at via innovation and is not obvious to the average professional working in this area, i.e. This invention complies with the "inventive step" aspect of patentability and, hence is new and involves an inventive step.

The device operates as follows

There are axial and centrifugal screws.

The present technical solution, thanks to its design and a different principle of operation combines a screw and a blade with its striding motion.

Since the rotation of body 1 is synchronous with the rotation of blade 3, the blade (wing) will always stride on its exit from opening 6 in the body on one side of the body. To avoid blade 3 coming into contact with body 1, their position at the start of the motion must correspond to Fig. 12 or to fig. 21.

When body 1 rotates clockwise from power drive 2, blade 3 also rotates clockwise from axis 4: in the same direction.

The result is that, in the time that the body 1 completes one revolution, blade 3 makes a single revolution but it produces two strides (half-turn). In other words, during one half-turn of body 1, blade 3 delivers one stride, moving from left to right with respect to body 1, while during the second half-turn of body 1, blade 3 delivers a stride moving from right to left with respect to body 1.

Watching the movement of the tip of blade 3 from the vicinity of power drive 2 of body 1, one will see that the tip moves in a circle, while watching the same movement from above body 1, one will observe that during a half-revolution of body 1, the tip of blade 3 moves along a trajectory in the shape of the letter "S", while during the second half-revolution it moves along a reflected figure in the shape of the letter "S".

Having a side view of the movement of blade 3,one will see that the tip of blade 3 moves along a semi-circle: during the first half-revolution of body 1 the semi-circle flows in one way, during the second half-circle, it flows in the opposite direction.

In Fig. 30 the tip of blade 3 moves around its axis L along trajectory I, and-simultaneously - along trajectory II with respect to axis M of the rotation of body 1. In other words, the total trajectory of the tip of blade 3 is trajectory III. The trajectory of the edge of blade (blades) 3 is indicated with a dashed line/a short line, as viewed from the vicinity of power drive 2 of body 1.

This design permits the use of Pirogov's screw in airborne machines and in surface and underwater vessels.

The advantages of this engineering solution are:
- the direction of motion can be dynamically altered.
- Possibility of ultrasonic transportation, which raises the efficiency of the device because ultrasonic compression of the medium on the surface of the blade would generate a powerful propelling force.

During supersonic motion, 'a wedge hummer', which is a powerful compression of the air flow at the surface of the blade.

In the case axial crews: this has a negative effect, but in this device it makes blades more effective because it generates a powerful propelling force. Considering that velocity of a transport vessel is many times lower than that of the blades of axial screws that generate propelling power for the vessel, the tip of an axial blade moves with ultrasonic velocity even when the speed of the vessel is low. However the drag of the screw makes its work considerably more difficult. Since drag is not generated in the object of the present invention, efficiency of "Pirogov' screw" is considerably higher.
- Effective use of Coriolis Effect. Coriolis Effect generates additional propelling forces out of longitudinal flows of the medium [water or air] on the striding side of the blades.

The evaluation graph of the propelling forces of the blade look like shown on the graph of propelling forces of the screw as a function of the blade rotation angle (Fig. 31). One can see that the maximum stride of the wing when it is fully extended horizontally relative to the frame, as shown in Fig. 2.

Using a screw of this design allows designing means for conversion of strides of blades into translatory motion of a means of transport or another engineering object or of a transported medium. In this device power loss on idle motion of a blade (blades) are negligible because ineffective strides of the blade (blades) occurs during their small steps out of the openings in the body.

## Claims

1. A screw of flywheel effect with an asymmetrically rotating blade, comprised of a body that is able to rotate with respect to its own longitudinal axis by the means of a power drive and at least one blade positioned on the axis with a drive and mounted on the body, *different* in that the body represents a hollow shell carrying diametrically opposed, longitudinal cut-through openings, the longitudinal axes of which are either placed in the plane drawn through the axis of the body or forming an acute angle with the said plane, and the said blade is located inside the cavity in the body and is shaped like a wing, the rotation axis if which forms an angle with the plane of the blade and is vertical to the axial plane of the openings in such a fashion that the blade/s can pass easily through the said two cut-through openings on the side surface of the body, and the said body is mounted on a frame provided with a means of fastening the device to a transport vessel, while the said drive of the blade and the drive of the body are combined into a single integrated power drive, designed in such a fashion that it can rotate the body and blade synchronously and in the same direction, ensuring that the asymmetric position of the blade and the said side cut-through openings in the body coincide periodically.

2. A screw of flywheel effect with an asymmetrically rotary blade as in Claim 1, *different* in that the said hollow shell is cylindrical.

3. A screw of flywheel effect with an asymmetrical rotary blade as in Claim 1, *different* in that the said hollow shell of the body is shaped as a figure of revolution of curvilinear cross section.

4. A screw of flywheel effect with an asymmetric rotary blade as in Claim 1, *different* in that the said cut-through openings are rectangular.

5. A screw of flywheel effect with an asymmetrically positioned rotary blade as in Claim 1, *different* in that the said cut-through openings are curved.

6. A screw of flywheel effect with an asymmetrically positioned rotary blade as in Claim 1, *different* in that the said blade rotation axis is vertical to it.

7. A screw of flywheel effect with an asymmetrically positioned rotary blade as in Claim 1, *different* in that the said blade rotation axis is placed in a plane drawn through the axis of the body.

8. A screw of flywheel effect with an asymmetrically positioned rotary blade as in Claim 1, *different* in that the said blade rotation axis is displaced towards the outer surface of the body.

9. A screw of flywheel effect with an asymmetrically positioned rotary blade as in Claim 1, *different* in that the said power drive of the axis of the blade and body is made by mechanical engineering methods in the form of an angular transmission linking the axis of the blade with the shaft of the body rotation mechanism.

10. A screw of flywheel effect with an asymmetrically positioned rotary blade as in Claim 1 or 9, *different* in that the said angular transmission is made as a tapered reduction gear unit.

11. A screw of flywheel effect with an asymmetrically positioned rotary blade as in Claim 1 or 9, *different* in that the said angular transmission is made as tapered friction gear box.

12. A screw of flywheel effect with an asymmetrically positioned rotary blade as in Claim 1, *different* in that each power drives of the blade and body is an autonomous electric drive.

13. A screw of flywheel effect with an asymmetrically positioned rotary blade as in Claim 1, *different* in that each power drives of the blade and body is an autonomous electromechanical drive.

14. A screw of flywheel effect with an asymmetrically positioned rotary blade as in Claim 1, *different* in that each power drives of the blade and body is an autonomous hydraulic drive.

15. A screw of flywheel effect with an asymmetrically positioned rotary blade as in Claim 1, *different* in that the blades of the two blades version rotate in opposite directions and are able to leave the body through the same cut-through opening simultaneously and asymmetrically.

16. A screw of flywheel effect with an asymmetrically positioned rotary blade as in Claim 1, *different* in that the said fastening gear of the screw body frame designed to be attached to a transport means can be turned around at will.

17. A screw of flywheel effect with an asymmetrically positioned rotary blade as in Claim 1, *different* in that the said fastening of the screw body frame designed to be attached to a transport means is manufactured in the form of axes oriented along three directions of the Cartesian coordinates.
